Europäisches Patentamt

European Patent Office

Office européen des brevets

(11) Numéro de publication: **0 349 398**
**A1**

# (12) DEMANDE DE BREVET EUROPEEN

(21) Numéro de dépôt: **89401795.3**

(22) Date de dépôt: **23.06.89**

(51) Int. Cl.⁵: **B 65 D 6/12**
**B 65 D 21/08**

(30) Priorité: **29.06.88 FR 8808771**

(43) Date de publication de la demande:
**03.01.90 Bulletin 90/01**

(84) Etats contractants désignés:
**AT BE CH DE ES FR GB GR IT LI LU NL SE**

(71) Demandeur: **SAFIL**
**Route de Vaupy**
**F-45420 Bonny sur Loire (FR)**

(72) Inventeur: **Amosse, Michel**
**21 rue du Bourg Tibourg**
**F-75004 Paris (FR)**

(74) Mandataire: **Polus, Camille et al**
**c/o Cabinet Lavoix 2, Place d'Estienne d'Orves**
**F-75441 Paris Cedex 09 (FR)**

(54) **Conteneur présentoir.**

(57) Le conteneur présentoir (1) comporte un châssis comprenant des montants (4), des parois (5) portées par le châssis et s'étendant entre les montants (4), un plateau horizontal (10) formant support d'articles, déplaçable verticalement le long des montants (4) à l'aide d'un dispositif de suspension (11) de manière que la position en hauteur du plateau (10) soit fonction de la charge supportée par celui-ci. Les montants (4) sont creux et le dispositif de suspension (11) comporte des ressorts (23) incorporés dans les montants (4). L'une des extrémités de chaque ressort (23) est fixée au montant correspondant (4) et son autre extrémité est reliée au plateau (10).

FIG.1

EP 0 349 398 A1

# Description

## Conteneur présentoir

L'invention concerne les conteneurs présentoirs, en particulier le conteneurs à roulettes formant chariots. Ces conteneurs sont destinés notamment à recevoir des articles empaquetés afin de présenter ceux-ci à la vente dans les magasins.

On connaît des conteneurs comprenant une palette ou un plateau de charge qui est déplaçable verticalement à l'aide d'un dispositif de suspension. Ce dispositif de suspension fonctionne avec des ressorts de torsion, il est d'une construction relativement complexe, chère à réaliser et manque en outre de flexibilité d'emploi.

Le but de l'invention est de remédier à ces inconvénients en proposant un conteneur présentoir comportant un dispositif de suspension du plateau facile à fabriquer et à monter, et facile à adapter à des articles ayant des masses volumiques trés différentes.

L'invention a pour objet un conteneur présentoir comportant un châssis comprenant des montants, des parois portées par le châssis et s'étendant entre les montants, un plateau horizontal formant support d'articles, déplaçable verticalement le long des montants à l'aide d'un dispositif de suspension de manière que la position en hauteur du plateau soit fonction de la charge supportée par celui-ci, caractérisé en ce que lesdits montants sont creux et en ce que le dispositif de suspension comporte des ressorts incorporés dans au moins deux des montants, l'une des extrémités de chaque ressort étant fixée au montant correspondant et son autre extrémité étant reliée au plateau.

Selon d'autres caractéristiques de l'invention :
- Les ressorts sont reliés au plateau par des éléments formant coulisseaux montés déplaçables verticalement à l'intérieur des montants tout en étant guidés par les parois de ceux-ci, chaque coulisseau portant un bras horizontal faisant saillie hors du montant afin de supporter le plateau, le bras étant guidé le long d'une fente longitudinale formant glissière ménagée dans le montant.
- Le conteneur comporte des ressorts incorporés dans au moins deux montants voisins situés d'un même côté du plateau et les extrémités libres des deux bras voisins portés par des coulisseaux déplaçables dans deux montants voisins sont reliées l'une à l'autre par un élément transversal disposé perpendiculairement aux bras de façon à former un élément en C supportant le plateau d'un côté de celui-ci.
- Deux côtés opposés du plateau sont reliés chacun à deux ressorts.
- le plateau est suspendu d'un seul côté par deux ressorts.

L'invention sera maintenant décrite plus en détails en référence aux dessins annexés dans lesquels :
La figure 1 est une vue en perspective, avec arrachement partiel, d'un conteneur suivant un mode de réalisation de l'invention ;
La figure 2 est une vue en perspective, avec arrachement partiel et partiellement en traits mixtes, montrant deux montants du conteneur et des ressorts disposés dans ceux-ci ;
La figure 3 est une vue partielle en coupe d'un conteneur montrant un dispositif de suspension, deux ressorts disposés dans des montants correspondants et un plateau supporté par le dispositif de suspension ;
La figure 4 est une vue en coupe suivant la ligne 4-4 de la figure 3 montrant un montant et une partie d'un dispositif de suspension montée dans celui-ci ;
La figure 5 est une vue partielle en perspective montrant un angle du plateau du conteneur.

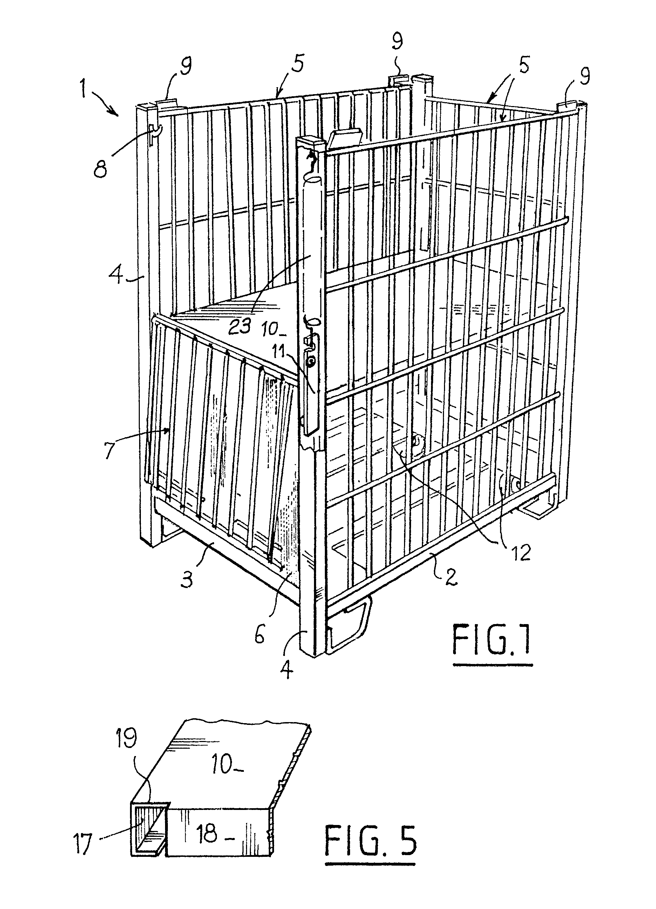

La figure 1 est une vue d'ensemble d'un conteneur présentoir 1 selon un mode de réalisation de l'invention. Ce conteneur comporte un châssis comprenant des longerons 2, des traverses 3 et des montants 4. Le châssis forme une structure parallélépipédique. Des parois 5 sont solidaires des montants 4 et montées de façon à relier deux montants voisins. Les parois 5 sont dans l'exemple illustré sur la figure 1 constituées de fils métalliques soudés ensemble en forme de grilles, mais elles peuvent aussi être constituées par des éléments pleins. La figure 1 montre par ailleurs un conteneur dont la paroi formant face frontale comprend une partie inférieure constituée par une plaque métallique 6 reliée à deux montants 4 et à une traverse 3. La partie supérieure de la face frontale est constituée par une grille 7 rabattable formant volet articulée sur les mêmes montants 4. Le volet 7 peut être basculé entre une position basse comme montré sur la figure 1 et une position haute dans laquelle il est verrouillé à l'aide d'organes de retenue 8 sous forme de crochets solidaires des montants correspondants. La paroi arrière est avantageusement repliable afin de permettre le chargement et le déchargement par des machines semi-automatiques appropriées.

Des organes de gerbage 9 sont disposées sur le bord supérieur des parois latérales afin de recevoir un second conteneur (non représenté sur les figures).

Le conteneur est pourvu d'un plateau horizontal 10 de forme rectangulaire formant support d'articles, qui sont de préférence des articles présentés dans des emballages bien définis comme par exemple des paquets de beurre qui sont disposés en plusieurs couches sur le plateau.

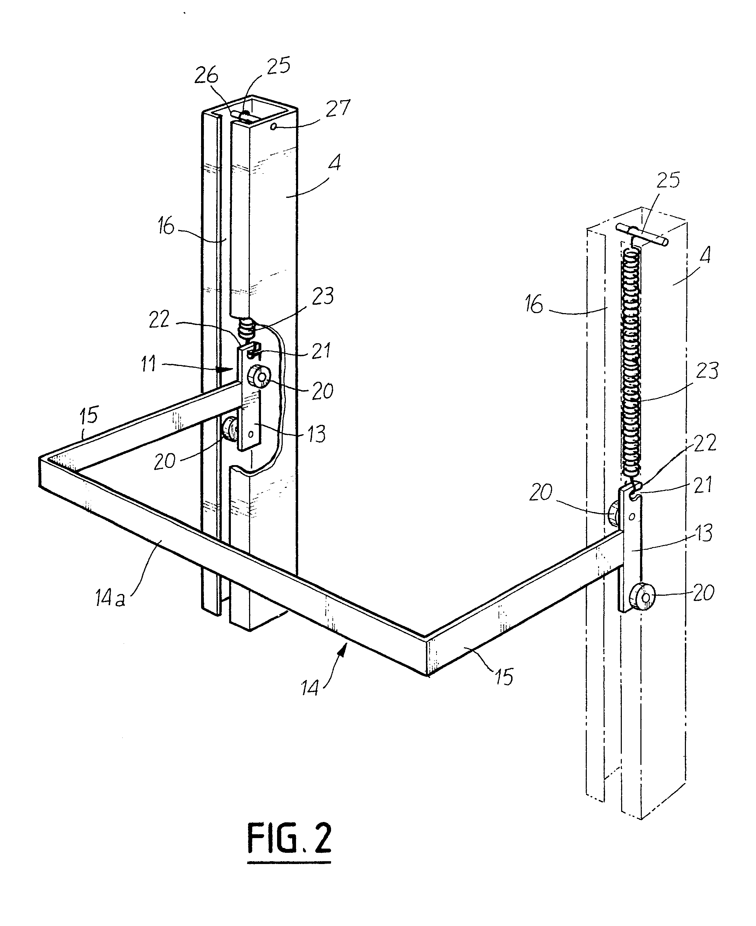

Le plateau 10 est déplaçable verticalement le long des montants 4 à l'aide de dispositifs de suspension 11 qui seront décrits plus en détail en se référant aux figures 2 à 4.

La figure 2 montre tous les éléments constitutifs d'un dispositif de suspension selon l'invention. Chaque dispositif de suspension comporte au moins deux éléments allongés formant coulisseaux 13. Les montants 4 sont creux afin de loger et guider les coulisseaux 13, chaque coulisseau étant monté déplaçable verticalement dans un montant correspondant.

Les deux coulisseaux 13 d'un côté du plateau sont reliés l'un à l'autre par un élément en C 14 comportant des bras 15 qui sont fixés au bord longitudinal des coulisseaux, perpendiculairement à ceux-ci. Les deux bras 15 sont reliés entre eux par un élément transversal 14a.

Les deux bras 15 de l'élément en C font saillie hors des montants 4 à travers de fentes longitudinales 16 formant glissières pour l'élément en C. Un élément en C est disposé d'un côté et de l'autre du plateau afin de supporter celui-ci.

Chacun des bords longitudinaux du plateau horizontal 10 est sur toute sa longueur solidaire d'un élément en L 17 (figure 5) dirigé vers le bas à partir du bord et ensuite vers l'intérieur du plateau. Les éléments en L 17 reçoivent les bras 15 de l'élément en C et maintiennent ceux-ci dans une position bloquée entre le plateau et eux-mêmes.

Dans l'exemple illustré sur la figure 5, le plateau comporte le long de ses bords transversaux des rebords 18 s'étendant verticalement vers le bas. Le plateau 10 est à chaque angle pourvu d'une découpe 19 permettant l'introduction de l'élément transversal 14a de l'élément en C 14 derrière le rebord 18 du plateau lors de l'assemblage du dispositif de suspension 11 avec le plateau.

Chaque coulisseau 13 est pourvu de galets de guidage 20 disposés de part et d'autre de celui-ci.

Dans l'exemple illustré sur les figures, un seul galet est disposé de chaque côté du coulisseau 13. Les galets sont disposés à des niveaux différents suivant la longueur du coulisseau et sont décalés transversalement l'un par rapport à l'autre de façon que les galets soient en contact de roulement avec des parois opposées du montant lorsque l'élément en C 14 se trouve dans une position horizontale, tout en donnant la possibilité au coulisseau 13 de basculer légèrement avec l'élément en C afin d'éviter un coincement entre les coulisseaux et les parois des montants.

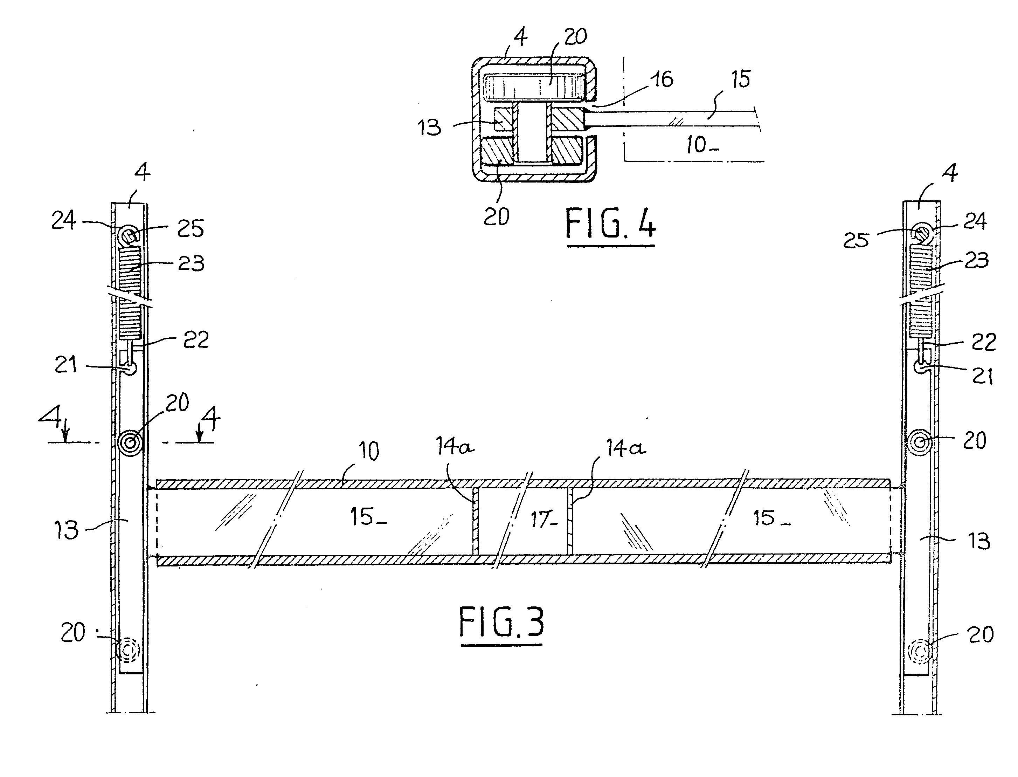

Chaque coulisseau 13 est pourvu d'une encoche 21 (voir figure 3) près de son extrémité supérieure.

Cette encoche reçoit l'extrémité en forme de crochet 22 d'un ressort hélicoidal 23. Le ressort s'étend verticalement dans le montant 4 et son extrémité, également en forme de crochet 24, est fixée au montant par l'intermédiaire d'un axe 25. L'axe 25 est logé dans deux perçages 26, 27 alignés et ménagés dans deux parois opposées du montant.

Le dispositif 11 de suspension du plateau 10 est réglable afin de s'adapter à des articles ayant des masses volumiques très différentes, de sorte que la couche supérieure des articles soit toujours à un niveau élevé et de cette façon bien présentés au client. Le dispositif de suspension 11 est réglable dans la mesure ou l'on peut faire varier le nombre de ressorts, c'est-à- dire qu'on n'utilise par exemple que deux ressorts au lieu de quatre tout en gardant le même nombre de coulisseaux dans les montants. Les coulisseaux qui ne sont pas reliés à un ressort servent dans ce cas uniquement au guidage du dispositif de suspension lors du déplacement du plateau le long des montants. Une autre possibilité est d'utiliser des ressorts ayant des raideurs différentes. On peut aussi envisager une série de trous alignés verticalement dans le montant pour régler la hauteur du point de fixation de l'axe 25.

Selon une autre variante non représentée sur les figures, on utilise un ressort hélicoidal de compression disposé dans la partie inférieure du montant et en contact avec un coulisseau. Le ressort est comprimé par la charge exercée par le plateau sur le conteneur.

Selon encore une autre variante non représentée sur les figures, on utilise un ressort pneumatique disposé dans la partie inférieure du montant et relié à un coulisseau. Le ressort pneumatique est comprimé par la charge exercée par le plateau sur le conteneur.

Le conteneur suivant l'invention fonctionne de la façon suivante. Des articles sont disposés en rangées et en couches sur le plateau 11 qui, grâce au dispositif de suspension 11 se déplace vers le bas au fur et à mesure qu'il est chargé. La position en hauteur du plateau est fonction de la charge, supportée par celui-ci et la couche supérieure d'articles se trouve toujours dans une position haute. Ensuite, lorsque les clients prennent des articles, le plateau est successivement déchargé et remonte ainsi jusqu'à sa position haute initiale lorsque le conteneur est vidé.

Dans le cas où les articles destinés à être supportés par le plateau horizontal 10 ont une masse volumique relativement peu important, il est possible, selon une variante correspondant à l'agencement montré sur la figure 2, d'avoir un seul dispositif de suspension disposé d'un côté du plateau qui par conséquent est monté en porte-à-faux.

La figure 1 montre un mode de réalisation de l'invention selon lequel le conteneur 1 comporte des roulettes 12. Le conteneur est de cette façon rendu mobile de sorte qu'il constitue un chariot présentoir.

Selon d'autres modes de réalisation de l'invention (non représentés sur les figures) le conteneur est monté fixe dans un rayon de magasin et on peut aussi envisager tout un ensemble de conteneurs fixes formant des rangées, par exemple dans une chambre de conservation. Dans ce cas, il est avantageux de prévoir une paroi arrière au moins partiellement rabattable afin de faciliter le chargement du plateau.

Le conteneur proposé est, dans tous les modes de réalisation, facile à fabriquer, peu coûteux, et facilement adaptable à des articles ayant des masses volumiques variées. L'invention donne en outre une forme esthétique aux conteneurs étant donné que tous les ressorts sont incorporés dans les montants.

**Revendications**

1.- Conteneur présentoir comportant un châssis comprenant des montants (4), des parois (5) portées par le châssis et s'étendant entre les montants (4), un plateau horizontal (10) formant support d'articles, déplaçable verticalement le long des montants (4) à l'aide d'un dispositif de suspension (11) de manière que la position en hauteur du plateau (10) soit fonction de la charge supportée par celui-ci, caractérisé en ce que lesdits montants (4) sont creux et en ce que le dispositif de suspension (11) comporte des ressorts (23) incorporés dans au moins deux des montants (4), l'une des extrémités de chaque ressort (23) étant fixée au montant correspondant (4) et son autre extrémité étant reliée au plateau (10).

2.- Conteneur suivant la revendication 1, caractérisé en ce que les ressorts (23) sont reliés au plateau (10) par des éléments formant coulisseaux (13) montés déplaçables verticalement à l'intérieur des montants (4) tout en étant guidés par les parois de ceux-ci, chaque coulisseau (13) portant un bras horizontal (15) faisant saillie hors du montant (4) afin de supporter le plateau (10), le bras (15) étant guidé le long d'une fente longitudinale (16) formant glissière ménagée dans le montant (4).

3.- Conteneur suivant la revendication 2, caractérisé en ce qu'il comporte des ressorts (23) incorporés dans au moins deux montants voisins (4) situés d'un même côté du plateau et que les extrémités libres de deux bras (15) portés par des coulisseaux déplaçables dans deux montants voisins (4) sont reliées l'une à l'autre par un élément transversal (14a) disposé perpendiculairement au bras de façon à former un élément en C (14) supportant le plateau (10) d'un côté de celui-ci.

4.- Conteneur suivant l'une quelconque des revendications précédentes, caractérisé en ce que les deux côtés opposés du plateau sont reliés chacun à deux ressorts.

5.- Conteneur suivant l'une quelconque des revendications 1 à 3, caractérisé en ce que le plateau (10) est suspendu d'un seul côté par deux ressorts (23).

6.- Conteneur suivant l'une quelconque des revendications 2 à 5, caractérisé en ce que les ressorts (23) sont des ressorts hélicoïdaux de traction disposés verticalement dans des montants (4) et dont les extrémités supérieures sont reliées aux extrémités supérieures des coulisseaux correspondants (13) et dont les extrémités supérieures sont fixées aux montants (4).

7.- Conteneur suivant l'une quelconque des revendications 2 à 5, caractérisé en ce que les ressorts (23) sont des ressorts hélicoïdaux travaillant en compression disposés dans la partie inférieure d'un montant (4) et en contact avec l'extrémité inférieure d'un coulisseau correspondant (13).

8.- Conteneur suivant l'une quelconque des revendications 2 à 5, caractérisé en ce que les ressorts (23) sont des ressorts pneumatiques disposés dans les parties inférieures des montants (4) et reliés à des coulisseaux correspondants (13).

9.- Conteneur suivant l'une quelconque des revendications 2 à 8, caractérisé en ce que les montants ont une section transversale rectangulaire et que chaque coulisseau (13) comporte au moins deux galets (20) disposés de part et d'autre de celui-ci à deux niveaux différents suivant la longueur de celui-ci, les galets étant destinés à guider le coulisseau dans le montant correspondant.

10.- Conteneur suivant la revendication 9, caractérisé en ce que les galets (20) disposés à des niveaux différents sont décalés axialement l'un par rapport à l'autre de façon à être chacun en contact de roulement avec une des deux parois opposées du montant correspondant.

11.- Conteneur suivant l'une quelconque des revendications précédentes, caractérisé en ce qu'il est pourvu de roulettes (12) afin de constituer un chariot.

FIG.1

FIG.5

FIG. 2

FIG. 4

FIG. 3

EP 0 349 398 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | SOVIET INVENTIONS ILLUSTRATED Section M, semaine 8636, abrégé no. 237282 Q/32, 19 septembre 1986, Derwent Publications Ltd., London, GB; & SU - A - 1206189 (FRUIT VEGET ECONOMY) 23.01.1986 --- | 1,2,4-6 ,11 | B 65 D 6/12 B 65 D 21/08 |
| A | GB-A- 610 338 (W. J. GIBBS) * le document en entier * ----- | 1 | |

DOMAINES TECHNIQUES RECHERCHES (Int. Cl.5)

B 65 D

Le présent rapport a été établi pour toutes les revendications

| Lieu de la recherche | Date d'achèvement de la recherche | Examinateur |
|---|---|---|
| BERLIN | 06-09-1989 | NOVELLI B. |

EPO FORM 1503 03.82 (P0402)